# EUROPÄISCHE PATENTSCHRIFT

(11) **EP 0 547 314 B1**
(45) Veröffentlichungstag und Bekanntmachung des Hinweises auf die Patenterteilung: **15.02.1995**
(21) Anmeldenummer: 92117168.2
(22) Anmeldetag: 08.10.1992
(51) Int. Cl.: E04F 10/06, F16B 5/06, E04H 15/64, E06B 9/171

(54) **Vorrichtung zum Festlegen des Keders einer Markisenbahn oder dergleichen in einer Keder-Nut**
Fixing arrangement of a border reinforcement of an awning canvas or similar in a groove
Dispositif de fixation du renforcement de bord d'une toile de store ou semblable dans une rainure

(30) Priorität: 18.12.1991 DE 4141687
(43) Veröffentlichungstag der Anmeldung: 23.06.1993
(73) Patentinhaber: Schmitz-Werke GmbH + Co., D-48282 Emsdetten (DE)
(72) Erfinder: Wessels, Bernhard, W-4440 Rheine 11 (DE)
(74) Vertreter: Rau, Manfred, Dr. Dipl.-Ing.

(56) Entgegenhaltungen:
- CH-A- 470 597
- DE-A- 1 936 236
- LU-A- 61 446
- US-A- 4 391 559
- US-A- 5 002 111

## Beschreibung

Die Erfindung richtet sich auf eine Vorrichtung zum Festlegen des Keders einer Markisenbahn oder dergleichen in einer Keder-Nut, umfassend einen Grundkörper aus Kunststoff mit einer Längsausnehmung und wenigstens einem zur Vorderseite hin offenen Längsschlitz, wobei in die Längsausnehmung eine Schraube unter Aufspreizung der durch den wenigstens einen Längsschlitz gebildeten Spreizarme einschraubbar ist (siehe CH-A-470 597).

Derartige Vorrichtungen werden vorzugsweise dazu verwendet, um das Markisentuch mit seiner Vorderkante an dem sogenannten Ausfallarm von Gelenkarmmarkisen zu befestigen.

Bei herkömmlichen derartigen Vorrichtungen konnte es passieren, daß die Vorrichtung so in den endseitigen Hohlraum, der sich in Längsrichtung des Keders des Markisentuches erstreckt, eingesetzt wurde, daß beim Einschrauben der Schraube und dem darauf folgenden Aufspreizen der Spreizarme einer der Spreizarme gerade in dem seitlichen Schlitz der Keder-Nut zu liegen kam, so daß ein fester Sitz entweder überhaupt nicht erzielt werden konnte oder aber zunächst ein vermeintlich guter Sitz entstand, wobei aber in dem nachfolgenden Gebrauch die Befestigung sich löste. Dies kann bei großen Markisenanordnungen außerordentlich problematisch sein.

Hiervon ausgehend liegt der Erfindung die Aufgabe zugrunde, eine Vorrichtung der eingangs genannten Art so auszugestalten, daß unabhängig von der Orientierung der Vorrichtung in Umfangsrichtung beim Einsetzen in die Längsausnehmung des Keders ein zuverlässiger, fester Sitz bei einfacher und bequemer Handhabung erreicht wird.

Diese Aufgabe wird erfindungsgemäß dadurch gelöst, daß sich von der Mantelfläche des Dübels im Bereich von dessen äußerem, schraubenendseitigen Ende ein Ansatz in Richtung des Längsschlitzes und senkrecht zur Aufspreizrichtung der Spreizarme radial wegerstreckt.

Durch den erfindungsgemäß vorgesehenen Ansatz kann die Vorrichtung nur so formschlüssig mit der Stirnseite des Ausfallarms eingesetzt werden, daß der radiale Ansatz in dem Längsschlitz der Keder-Nut zu liegen kommt. Dies bedeutet andererseits aber, daß die Spreizarme sich in einer Richtung senkrecht hierzu aufspreizen, d. h. keinesfalls kann es vorkommen, daß einer der Spreizarme beim Aufspreizen in den Längsschlitz eingreift.

Es ist dementsprechend in jedem Fall ein absolut sicherer Sitz gewährleistet.

In weiterer Ausgestaltung der Erfindung kann vorgesehen sein, daß der Ansatz in Umfangsrichtung eine Breite aufweist, die etwas geringer ist als die Öffnungsweite der jeweiligen Keder-Nut.

Hierdurch ist einerseits ein leichtes Einsetzen gewährleistet, andererseits aber auch eine definierte Positionierung.

Die Schraubenbohrung endet günstigerweise im Bereich des inneren Endes des Längsschlitzes, so daß das Vorderende der Schraube beim Einschrauben in den Bereich des Längsschlitzes eindringt und auf diese Weise die Spreizschenkel um eine Zone im Bereich des inneren Endes des Längsschlitzes aufspreizt.

Um einen definierten Vorschub der Schraube an der Innenseite der Schraubenbohrung sicherzustellen, kann vorgesehen sein, daß dort wenigstens ein Längsschlitz angeordnet ist.

Nachfolgend wird die Erfindung anhand eines bevorzugten Ausführungsbeispiels in Verbindung mit der Zeichnung näher beschrieben. Dabei zeigen:
- Fig. 1: eine schematische perspektivische Ansicht einer Gelenkarmmarkise, bei welcher eine erfindungsgemäße Vorrichtung zum Festlegen des Markisentuches an dem Ausfallrohr eingesetzt werden kann, und

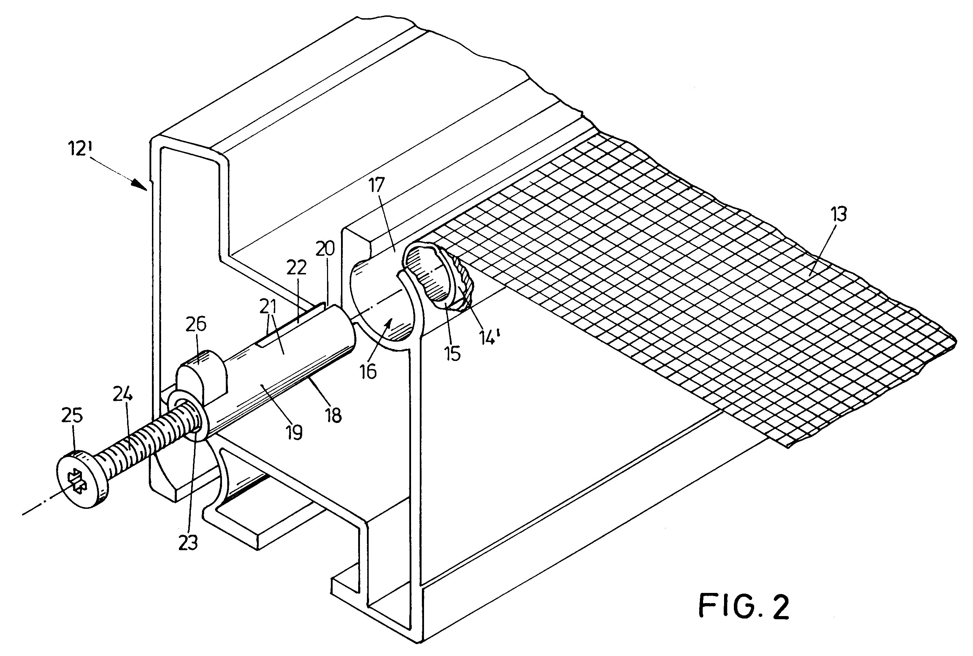

- Fig. 2: eine perspektivische, teilweise aufgebrochene Ansicht des Endbereiches des Ausfallrohres der Markise in Figur 1.

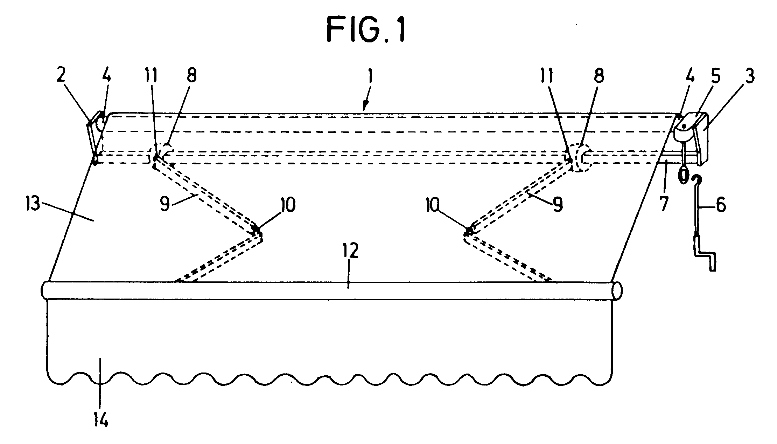

Die in der Zeichnung dargestellte Markise weist eine an einer Hauswand oder dergleichen zu befestigende Trageinrichtung 1 auf, die mit einer in Lagerplatten 2, 3 drehbar gelagerten Wickelwelle 4 versehen ist. Diese Wickelwelle 4 ist in bekannter Weise drehantriebbar, und zwar gemäß der Darstellung in Figur 1 mittels eines selbsthemmenden Getriebes 5, das wiederum über eine ein- bzw. aushängbare Kurbelstange 6 antreibbar ist. Anstelle des Getriebes 5 mit Kurbelstange 6 kann selbstverständlich auch - wie allgemein bekannt - ein elektromotorischer Antrieb, ein Gurtantrieb oder dergleichen eingesetzt werden. Als Teil der Trageinrichtung 1 ist weiterhin zwischen den Lagerplatten 2 und 3 ein Tragrohr 7 mit quadratischem Querschnitt angebracht, an dem mittels jeweils einer Halte- und Neigungsverstell-Einrichtung 8 Ausfallarme 9 in sogenannter Scherenausführung angebracht sind. Diese Ausfallarme 9 sind jeweils in ihrer Mitte geteilt und mit einem Schwenkgelenk 10 mit vertikaler Achse versehen. Die Ausfallarme 9 sind jeweils mit einem gleichartigen Schwenkgelenk 11 an der entsprechenden Einrichtung 8 und - in der Zeichnung nicht erkennbar - mit einem entsprechenden Schwenkgelenk an einem Ausfallrohr 12 angelenkt, so daß das Ausfallrohr 12 in einer mit der Wickelwelle 4 gemeinsamen Ebene verschoben werden kann, aber keine Bewegungen senkrecht zu dieser Ebene ausfuhrt.

An der Wickelwelle 4 ist ein rechteckiges Markisentuch befestigt, das durch die geschilderten Drehungen der Wickelwelle 4 auf diese auf- bzw. von dieser abgewickelt werden kann.

Das Markisentuch 13 ist weiterhin, wie nachfolgend im einzelnen beschrieben wird, an dem Ausfallrohr 12 festgelegt, wobei an dem Ausfallrohr 12 auch ein nach unten hängender Volant 14 befestigt sein kann.

Das Markisentuch 13 weist endseitig einen Keder 14' auf, der dadurch gebildet ist, daß das Tuch 13 im Bereich seiner unteren Längskante um ein Kunststoffrohr 15 umgeschlagen und vernäht ist.

Das Ausfallrohr 12' ist aus einem Aluminium-Strangpreßprofil hergestellt und weist an seiner Außenkante eine korrespondierende Keder-Nut 16 auf, in welche der Keder 15 des Tuches 13 von der Seite her eingeschoben werden kann, wobei das Markisentuch 13 als solches durch einen Längsschlitz 17 der Kedernut austritt.

Eine erfindungsgemäße Vorrichtung 18 zur Festlegung des Keders 14 in der Kedernut 16 weist einen etwa zylinderförmigen Grundkörper 19 aus Kunststoff auf, der von dem inneren Ende 20 her unter Ausbildung von zwei Spreizarmen 21 von einem Längsschlitz 22 bis etwa über die Mitte des Grundkörpers 19 durchsetzt wird.

Der Grundkörper 19 weist eine Längsausnehmung 23 auf, die an ihrer Innenseite mit einigen in der Zeichnung nicht dargestellten Gewindewindungen versehen ist. In die Längsausnehmung 23 wird eine Schraube 24 mit Kreuzschraubenkopf 25 eingeschraubt, wobei dann, wenn die Spitze der Schraube 24 aus der Längsbohrung 23 austritt und in den Bereich des Längsschlitzes 22 eintritt, die Spreizarme 23 aufgespreizt werden, so daß die Spreizarme 21 sich in der Keder-Nut 16 festspreizen.

Ein Ansatz 26 erstreckt sich in radialer Richtung von dem Bereich der Einlaßöffnung der Längsausnehmung 23 derart nach außen weg, daß er parallel zu dem Längsschlitz 22 oder mit anderen Worten senkrecht zur Aufspreizrichtung der Spreizarme 21 verläuft. Die Breite des Ansatzes 26 in Umfangsrichtung entspricht in etwa der Breite des Längsschlitzes 17 der Keder-Nut 16 in Umfangsrichtung, so daß die Vorrichtung 18 in die Keder-Nut 16 stirnseitig formschlüssig abschließend eingeschoben werden kann, wobei der Ansatz 26 in dem Längsschlitz 17 zu liegen kommt.

Hierdurch ist sichergestellt, daß die Spreizarme 21 beim Einschrauben der Schraube 24 so orientiert sind, daß sie sich zuverlässig an der Innenwand der Keder-Nut 16 abstützen und nicht zufällig im Bereich des Längsschlitzes 17 zu liegen kommen können.

## Patentansprüche

1. Vorrichtung zum Festlegen des Keders (14) einer Markisenbahn od. dgl. in einer Keder-Nut, umfassend einen Grundkörper (19) aus Kunststoff mit einer Längsausnehmung (23) und wenigstens einem zur Vorderseite hin offenen Längsschlitz (22), wobei in die Längsausnehmung eine Schraube (24) unter Aufspreizung der durch den wenigstens einen Längsschlitz gebildeten Spreizarme (21) einschraubbar ist, dadurch gekennzeichnet, daß sich von deren Mantelfläche im Bereich von deren äußeren, schraubenöffnungsseitigen Ende ein Ansatz (26) in Richtung des Längsschlitzes (22) und senkrecht zur Aufspreizrichtung der Spreizarme (21) radial wegerstreckt.

2. Vorrichtung nach Anspruch 1, dadurch gekennzeichnet, daß der Ansatz (26) in Umfangsrichtung eine Breite aufweist, die etwas geringer ist als die Öffnungsweite des Längsschlitzes (17) der jeweiligen Keder-Nut (16).

3. Vorrichtung nach Anspruch 1, dadurch gekennzeichnet, daß die Schrauben-Längsausnehmung (23) im Bereich des inneren Endes des Längsschlitzes (22) endet.

4. Vorrichtung nach Anspruch 1, dadurch gekennzeichnet, daß die Schrauben-Längsausnehmung (23) an ihrer Innenseite wenigstens einen Gewindegang aufweist.

## Claims

1. An apparatus for fixing the weatherstrip (14) of an awning web or the like in a weatherstrip groove, comprising a base body (19) made of plastic material with a longitudinal recess (23) and at least one longitudinal slot (22) open toward the front side, wherein a screw (24) can be screwed into the longitudinal recess while expanding the expanding arms (21) formed by the at least one longitudinal slot, characterized in that from the jacket surface of the expanding arms (21) in the area of their external end on the side of the screw opening an appendage (26) is radially extending in the direction of the longitudinal slot (22) and vertically to the expanding direction of the expanding arms (21).

2. An apparatus according to claim 1, characterized in that in the circumferential direction the appendage (26) has a width, which is somewhat smaller than the opening width of the longitudinal slot (17) of the respective weatherstrip groove (16).

3. An apparatus according to claim 1, characterized in that the longitudinal recess (23) of the screw ends in the area of the inner end of the longitudinal slot (22).

4. An apparatus according to claim 1, characterized in that the longitudinal recess (23) of the screw has at least one thread on its inner side.

## Revendications

1. Dispositif de fixation du renforcement de bord (14') d'une toile de store ou semblable dans une rainure, comprenant un corps de base (19) en matière plastique pourvu d'un évidement longitudinal (23) et d'au moins une fente longitudinale (22) ouverte vers l'avant, une vis (24) pouvant être vissée dans l'évidement longitudinal en écartant les bras d'écartement (21) formés par la fente longitudinale au nombre d'au moins une, caractérisé en ce que, sur sa surface périphérique, dans la zone de son extrémité extérieure située côté ouverture de vissage, un talon (26) s'étend radialement en direction de la fente longitudinale (22) et perpendiculairement au sens d'écartement des bras d'écartement (21).

2. Dispositif selon la revendication 1, caractérisé en ce que, dans le sens circonférentiel, le talon (26) présente une largeur légèrement inférieure à la largeur d'ouverture de la fente longitudinale (17) de la rainure correspondante (16).

3. Dispositif selon la revendication 1, caractérisé en ce que l'évidement longitudinal fileté (23) se termine dans la zone de l'extrémité intérieure de la fente longitudinale (22).

4. Dispositif selon la revendication 1, caractérisé en ce que l'évidement longitudinal fileté (23) comporte au moins un pas de vis sur son côté intérieur.
